# EUROPÄISCHE PATENTSCHRIFT

(11) **EP 1 671 157 B1**
(45) Veröffentlichungstag und Bekanntmachung des Hinweises auf die Patenterteilung: **19.08.2009**
(21) Anmeldenummer: 04765262.3
(22) Anmeldetag: 16.09.2004
(51) Int. Cl.: G01S 15/93, G01S 7/537

(54) **VERFAHREN ZUM DETEKTIEREN EINES HINDERNISSES IN DEM DETEKTIONSBEREICH EINER DETEKTIONSVORRICHTUNG**
METHOD FOR DETECTING AN OBSTACLE IN THE DETECTION AREA OF A DETECTION DEVICE
PROCEDE DE DETECTION D'UN OBSTACLE DANS LA ZONE DE DETECTION D'UN DISPOSITIF DE DETECTION

(30) Priorität: 11.10.2003 DE 10347364
(43) Veröffentlichungstag der Anmeldung: 21.06.2006
(73) Patentinhaber: Valeo Schalter und Sensoren GmbH, 74321 Bietigheim-Bissingen (DE)
(72) Erfinder: HEIMBERGER, Markus, 71732 Tamm (DE); GOTZIG, Heinrich, 74081 Heilbronn (DE)
(74) Vertreter: Steimle, Josef
(86) Internationale Anmeldenummer: PCT/EP2004/010359
(87) Internationale Veröffentlichungsnummer: WO 2005/036206

(56) Entgegenhaltungen:
- EP-A- 1 031 853
- US-A- 5 239 515
- PATENT ABSTRACTS OF JAPAN Bd. 017, Nr. 024 (P-1471), 18. Januar 1993 (1993-01-18) -& JP 04 250389 A (MATSUSHITA ELECTRIC WORKS LTD), 7. September 1992 (1992-09-07)
- PATENT ABSTRACTS OF JAPAN Bd. 008, Nr. 137 (P-282), 26. Juni 1984 (1984-06-26) -& JP 59 038675 A (NISSAN JIDOSHA KK), 2. März 1984 (1984-03-02)

## Beschreibung

Die Erfindung bezieht sich auf ein Verfahren zum Detektieren eines Hindernisses in dem Detektionsbereich einer Detektionsvorrichtung. Darüber hinaus bezieht sich die Erfindung auf die besagte Detektionsvorrichtung sowie ein Computerprogramm zum Durchführen dieses Verfahrens. Schließlich bezieht sich die Erfindung auch auf einen Datenträger mit dem besagten Computerprogramm.

Im Stand der Technik sind derartige Detektionsvorrichtungen grundsätzlich bekannt. Sie sind typischerweise in den Stoßfänger eines Kfz eingebaut und dienen dann als Einparkhilfe, indem sie Hindernisse in der näheren Umgebung des Kfz detektieren. Derartige bekannte Vorrichtung arbeiten typischerweise mit Ultraschall und umfassen mindestens eine Sendeeinrichtung und mindestens eine erste und eine zweite Empfangseinrichtung, wobei die zweite Empfangseinrichtung weiter zu der Sendeeinrichtung beabstandet ist als die erste Empfangseinrichtung. Zum Erfassen eines Hindernisses in dem Detektionsbereich der Detektionsvorrichtung ist deren Sendeeinrichtung ausgebildet, ein Sendesignal, zum Beispiel ein Ultraschallsignal zu jeweils einem Sendezeitpunkt auszusenden. Ebenfalls zu dem Sendezeitpunkt wird die erste Empfangseinrichtung aktiviert zum Empfangen eines ersten Empfangssignals und wird die zweite Empfangseinrichtung aktiviert zum Empfangen eines zweiten Empfangssignals, wobei die Empfangssignale insbesondere an dem Hindernis reflektierte Anteile des Sendesignals umfassen können. Es erfolgt dann eine Auswertung von wenigstens dem ersten Empfangssignal im Hinblick auf das Vorhandensein des Hindernisses in dem Detektionsbereich der Detektionsvorrichtung. Das Hindernis wird dann erkannt, wenn zumindest das erste Empfangssignal die an dem Hindernis reflektierten Anteile des Sendesignals enthält.

Bei der Auswertung von wenigstens dem ersten Empfangssignal im Hinblick auf das Vorhandensein des Hindernisses wird im Stand der Technik typischerweise so verfahren, dass das erste Empfangssignal nicht bereits unmittelbar ab dem Sendezeitpunkt, sondern frühestens ab einem jeder Empfangseinrichtung individuell zugeordneten Schwellenzeitpunkt erfolgt. Dieser Schwellenzeitpunkt wird im Stand der Technik typischerweise durch den jeder Empfangseinrichtung individuell zugeordneten Abstand zu der Sendeeinrichtung definiert. Der für eine Empfangseinrichtung charakteristische Schwellenzeitpunkt ergibt sich dann durch eine Division des Abstandes Sendeeinrichtung zu Empfangseinrichtung durch die Ausbreitungsgeschwindigkeit des Sendesignals im Raum. Dies bedeutet, dass Signalanteile des jeweiligen Empfangssignals, die zeitlich vor diesem Abstand zugeordneten Schwellenzeitpunkt empfangen werden, mit Sicherheit nicht von dem zu detektierenden Hindernis stammen können; deshalb sind die Detektionsvorrichtungen aus physikalischen Gründen nicht in der Lage, Hindernisse mit einer geringeren Entfernung zu der Vorrichtung als dem akustischen Kurzschluss, welcher als die Hälfte des jeweiligen Abstandes Sende- zu Empfangseinrichtung definiert ist, zu detektieren. Aus demselben Grund wird, wie bereits oben erwähnt, mit der Auswertung des Empfangssignals erst nach dem individuellen Schwellenzeitpunkt begonnen.

Aber auch nach diesem Schwellenzeitpunkt kann das Empfangssignal zumindest teilweise durch Störsignale gebildet sein, die zu einer fehlerhaften Annahme über das Vorhandensein des Hindernisses in dem Detektionsbereich der Detektionsvorrichtung führen können, wenn sie irrtümlich als reflektierte Anteile des Sendesignals an dem Hindernis angesehen werden. Ein derartiger Irrtum ist insbesondere deswegen sehr leicht möglich, weil sich die Störsignale in ihrer Signalform nicht zwingend notwendig von den reflektierten Anteilen des Sendesignals unterscheiden.

Aus der JP 4250389 ist ein Ultraschallsystem zur Hinderniserkennung bekannt, bei dem mehrere Sensormodule zeitlich nacheinander reflektierte Ultraschallsignale auswerten. Zur Erkennung von Störsignalen ist eine Störsignalüberwachungsperiode vor dem erstmaligen Aussenden von Ultraschallsignalen vorgesehen, innerhalb der auftretende Störsignale erkannt werden können. Weitere Systeme sind aus JP59038675 und EP1031853 bekannt. Ausgehend von diesem Stand der Technik ist es die Aufgabe der vorliegenden Erfindung, ein bekanntes Verfahren zum Detektieren eines Hindernisses sowie ein Computerprogramm und eine Detektionsvorrichtung zum Durchführen dieses Verfahrens derart weiterzubilden, dass eine zuverlässigere Aussage über das Vorhandensein des Hindernisses in dem Detektionsbereich der Detektionsvorrichtung möglich ist.

Diese Aufgabe wird durch das in Patentanspruch 1 beanspruchte Verfahren gelöst.

Das erfindungsgemäße Verfahren sieht vor, eine von der Hindernisdetektion unabhängige Störsignaldetektion bereitzustellen. Wenn ein Störsignal von der zweiten Empfangseinrichtung, die zu der ersten Empfangseinrichtung beabstandet ist, ein Störsignal detektiert wird, wird als ungünstigster möglicher Fall grundsätzlich angenommen, dass dieses Störsignal auch in dem ersten Empfangssignal enthalten ist und dementsprechend zu einer fehlerhaften Auswertung des Empfangssignals im Hinblick auf das Vorhandensein des Hindernisses führen könnte. Um derartige Fehlinterpretationen zu vermeiden, wird deshalb in diesen Fällen die Überwachung von wenigstens dem ersten Empfangssignal im Hinblick auf das Vorhandensein des Hindernisses oder die Verwertung des Ergebnisses der Überwachung für eine vorbestimmte Sperrzeitdauer ausgesetzt. Anders ausgedrückt erfolgt erfindungsgemäß eine Auswertung des ersten Empfangssignals im Hinblick auf das Vorhandensein des Hindernisses nur dann, wenn kein Störsignalanteil detektiert wird, wodurch eine Aussage über das Vorhandensein des Hindernisses in dem Detektionsbereich zuverlässiger möglich ist.

Die Auswertung des zweiten Empfangssignals im Hinblick auf darin enthaltene Störsignalanteile erfolgt nur in einem Zeitintervall zwischen dem Sendezeitpunkt und einem durch den räumlichen Abstand der zweiten Empfangseinrichtung zu der Sendeeinrichtung repräsentierten Schwellenzeitpunkt, weil nur dann gewährleistet ist, dass das zweite Empfangssignal keine an dem Hindernis detektierten Anteile des Sendesignals, sondern damit zwangsläufig nur Störsignalanteile enthält.

Um die Zuverlässigkeit der Aussage über das Vorhandensein des Hindernisses weiter zu erhöhen, ist es vorteilhaft, das Aussenden des Sendesignals, den Empfang des ersten und zweiten Empfangssignals sowie das Auswerten des zweiten Empfangssignals im Hinblick auf Störsignalanteile mindestens einmal zu wiederholen.

Die oben beschriebene Aufgabe der Erfindung wird weiterhin durch ein Computerprogramm und eine Detektionsvorrichtung zum Durchführen dieses Verfahrens sowie durch einen Datenträger mit dem Computerprogramm gelöst. Die Vorteile dieser Lösungen entsprechen den oben mit Bezug auf das beanspruchte Verfahren beschriebenen Vorteilen. Darüber hinaus ist es vorteilhaft, den Abstand der zweiten Empfangseinrichtung von der Sendeeinrichtung möglichst groß zu wählen.

Weiterhin kann es vorteilhaft sein, wenn die zweite Empfangseinrichtung ausgebildet ist, andersartige physikalische Signale, insbesondere Störsignale, zu detektierten, soweit diese Signale auch den Empfang der ersten Empfangseinrichtung beziehungsweise des ersten Empfangssignals negativ beeinflussen können.

Der Beschreibung sind insgesamt zwei Figuren beigefügt, wobei
- Figur 1: den Aufbau der erfindungsgemäßen Detektionsvorrichtung; und
- Figur 2: das erfindungsgemäße Verfahren
veranschaulicht.

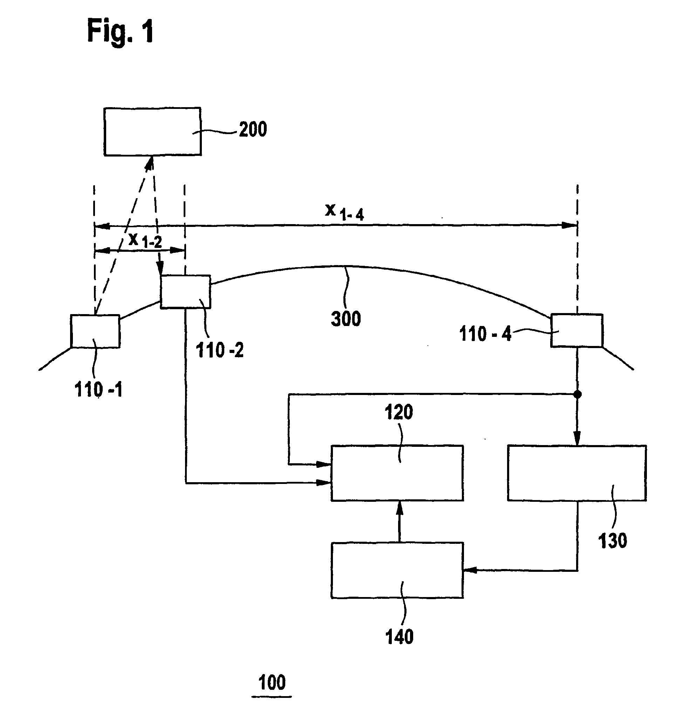

Die in Figur 1 gezeigte Überwachungsvorrichtung 100 zum Überwachen eines Raumes umfasst mindestens eine Sendeeinrichtung 110-1 zum Aussenden eines Sendesignals und mindestens eine erste Empfangseinrichtung 110-2 zum Empfangen eines ersten Empfangssignals und eine zweite Empfangseinrichtung 110-4 zum Empfangen eines zweiten Empfangssignals. Für den erfindungsgemäßen Aufbau der Überwachungsvorrichtung 100 ist es wichtig, dass die zweite Empfangseinrichtung 110-4 von der Sendeeinrichtung 110-1 weiter entfernt angeordnet ist als die erste Empfangseinrichtung 110-2. Die Begründung für den unterschiedlichen Abstand liegt darin, dass die zweite Empfangseinrichtung 110-2 zur Detektion des Fremdkörpers 200 vorgesehen ist, während die zweite Empfangseinrichtung 110-4 zur Detektion von Störsignalanteilen vorgesehen ist. Eine weitergehende Begründung erfolgt weiter unten.

Weiterhin umfasst die Überwachungsvorrichtung 100 eine erste Auswerteeinrichtung 120 zum Auswerten von wenigstens dem ersten Empfangssignal im Hinblick auf das Vorhandensein des Fremdkörpers 200 in dem Raum. Optional kann neben den ersten Empfangseinrichtungen 110-2 grundsätzlich auch die zweite Empfangseinrichtung 110-4 zur Detektion des Fremdkörpers 200 verwendet werden; aus physikalischen Gründen ist es jedoch vorteilhaft, wenn für diese Detektion lediglich diejenigen Empfangseinrichtungen verwendet werden, welche möglichst nahe an der Sendeeinrichtung 110-1 angeordnet sind.

Erfindungsgemäß umfasst die Überwachungsvorrichtung 100 weiterhin eine zweite Auswerteeinrichtung 130 zum Auswerten des zweiten Empfangssignals im Hinblick auf Störsignalanteile, welche auf das Vorhandensein einer Störsignalquelle (hier nicht gezeigt) in dem Raum schließen lassen. Schließlich umfasst die Überwachungsvorrichtung 100 eine Steuereinrichtung 140 zum Aktivieren von zumindest der ersten Auswerteeinrichtung oder zum Freigeben des Ergebnisses der Überwachung über das Vorhandensein des Fremdkörpers nur dann, wenn von der zweiten Auswerteeinrichtung 130 kein Störsignal in dem zweiten Empfangssignal detektiert wurde.

Eine typische Störquelle, welche die unerwünschten Störsignale generieren könnte, ist zum Beispiel das Bremssystem eines LKW, wenn dieses entlüftet wird. Es entstehen dann starke Druckluftschwankungen in der Umgebung des LKW, die als Störsignal die Überwachung eines Nahbereiches eines in der Nähe stehenden PKW mit einer in den PKW eingebauten Überwachungsvorrichtung negativ beeinflussen könnten, insbesondere wenn diese Überwachungsvorrichtung auf Ultraschallbasis arbeitet.

Jede Überwachungseinrichtung arbeitet grundsätzlich nach einem physikalischen Prinzip, insbesondere auf Ultraschallbasis. Sie kann deshalb insbesondere auch durch physikalisch gleichartige Störsignale gestört werden. Deshalb ist es allgemein vorteilhaft, wenn die zweite Empfangseinrichtung ausgebildet ist, physikalisch gleichartige Signale als Störsignale zu empfangen. Allerdings kann die Überwachungsvorrichtung eventuell auch durch physikalisch andersartige Störsignale gestört werden; so ist es beispielsweise denkbar, dass eine Überwachungsvorrichtung 100, deren Sende- und erste Empfangseinrichtungen auf Ultraschallbasis arbeiten, auch durch Radarsignale gestört wird. Um derartige Störsignale wirkungsvoll zu detektieren, ist es vorteilhaft, wenn die zweite Empfangseinrichtung 110-4 zur Detektion derartiger andersartiger physikalischer Signale ausgebildet ist.

Die in Figur 1 gezeigten Sende- und Empfangseinrichtungen 110-1...-4 können jeweils Teil einer Wandlereinrichtung sein. Eine solche Wandlereinrichtung, zum Beispiel ein Ultraschallwandler, zeichnet sich dadurch aus, dass er wahlweise entweder als Sendeeinrichtung oder als Empfangseinrichtung betrieben werden kann. Bezogen auf Figur 1 würde dies bedeuteten, dass jede der dort gezeigten Einrichtungen 110-1...-4 wahlweise als Sende- oder Empfangseinrichtung betreibbar ist. Sowohl für die Detektion des Fremdkörpers 200 wie auch für die Detektion von eventuellen Störsignalanteilen ist es vorteilhaft, die Position der Sende- und Empfangseinrichtungen bei vorzugsweise jeder Wiederholung des Verfahrens zur Detektion des Fremdkörpers und/oder zur Detektion des Störsignalanteils zu verändern. Die Veränderung erfolgt vorzugsweise zyklisch. Findet eine erste Durchführung der Verfahren in der bisher beschriebenen Anordnung von Sendeeinrichtung 110-1 und Empfangseinrichtungen 110-2...-4 statt, so könnte bei einer nachfolgenden zyklischen Wiederholung der Verfahren eine Wandlereinrichtung an der Position 110-4 als Sendeeinrichtung betrieben werden, während die anderen Wandlereinrichtungen an den Positionen der Einrichtungen 110-1, 110-2 jeweils als Empfangseinrichtungen betrieben werden. Es würde sich dann empfehlen, die Wandlereinrichtung an der Position 110-1 als zweite Empfangseinrichtung zur Detektion des Störsignalanteils zu betreiben, weil diese Wandlereinrichtung den größten Abstand zu der als Sendeeinrichtung betriebenen Wandlereinrichtung an der Position 110-4 hätte.

Voraussetzung dafür wäre jedoch, dass von der Wandlereinrichtung an der Position 110-1 eine Verbindung zu der zweiten Auswerteeinrichtung 130 bestehen würde (in Figur 1 nicht gezeigt). Weiterhin wäre es erforderlich, dass die Wandlereinrichtungen von einer Steuereinrichtung, zum Beispiel der Steuereinrichtung 140 bezüglich ihrer jeweils gewünschten Betriebsart, das heißt Sendebetrieb oder Empfangsbetrieb eingestellt werden können.

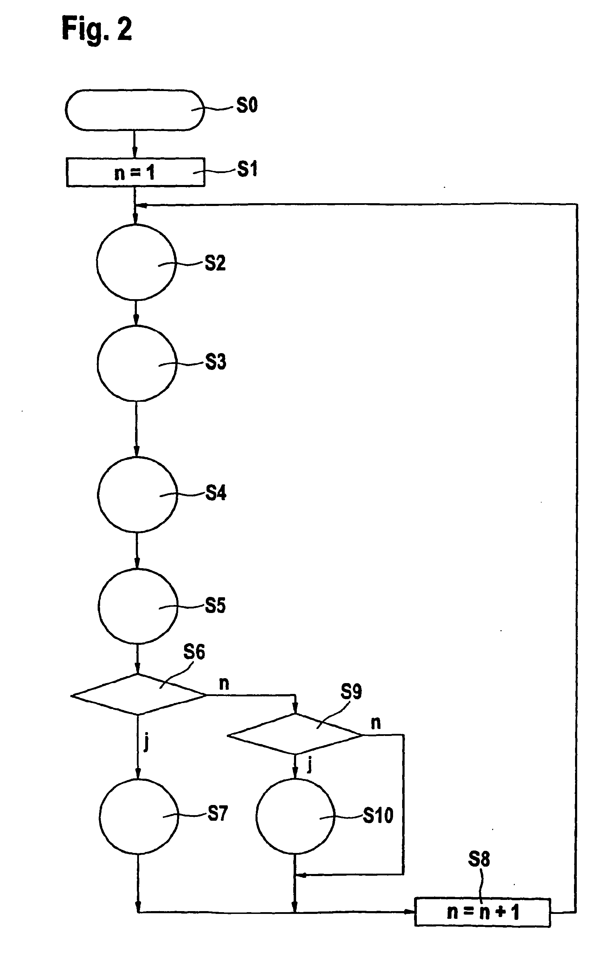

Nachfolgend wird die Funktionsweise der in Figur 1 beschriebenen Überwachungsvorrichtung, das heißt das erfindungsgemäße Verfahren zum Überwachen eines Raumes unter Bezugnahme auf die Figuren 1 und 2 näher beschrieben.

In Figur 2 ist zu erkennen, dass nach einem Startschritt S0 in einem Schritt S1 zunächst eine Initialisierung diverser Variablen erfolgt. Dazu gehört zum einen, dass eine Variable n, welche die Anzahl der jeweils durchgeführten Durchläufe des Verfahrens repräsentiert, mit vorzugsweise 1 vorbesetzt wird. Weiterhin wird in Verfahrensschritt S1 festgelegt, ob die nachfolgend noch näher beschriebene Störsignaldetektion bereits zeitlich vor, zeitgleich oder erst nach dem Beginn der Überwachung des Raumes im Hinblick auf das Vorhandensein eines Fremdkörpers beginnen soll. Für das in Figur 2 dargestellte Ausführungsbeispiel wird beispielhaft angenommen, dass die Überwachung des Raumes (Schritte S2-S4) bereits stattfindet, wenn die Überwachung im Hinblick auf Störsignale (Schritt S5) beginnt. Diese Situation wird mit Hilfe der nachfolgenden Ausführungen weiter verdeutlicht.

Nach der Initialisierung in Verfahrensschritt S1 beginnt in Verfahrensschritt S2 die Überwachung des Raumes, insbesondere der Umgebung eines Kraftfahrzeugs im Hinblick auf das Vorhandensein eines Fremdkörpers 200, insbesondere eines Einpark-Hindernisses, durch Aussenden eines Sendesignals durch die Sendeeinrichtung 110-1 in den besagten Raum zu einem Sendezeitpunkt. Vorzugsweise gleichzeitig wird in Verfahrensschritt S3 die erste Empfangseinrichtung 110-2 zum Empfangen eines ersten Empfangssignals aktiviert. Nachfolgend wird das von der Empfangseinrichtung 110-2 empfangene erste Empfangssignal von der ersten Auswerteeinrichtung 120 in Verfahrensschritt S4 ausgewertet im Hinblick auf das Vorhandensein des Fremdkörpers 200 in dem Raum. Die Auswerteeinrichtung 120 detektiert den Fremdkörper 200 dann, wenn sie an dem Fremdkörper 200 reflektierte Anteile des zuvor von der Sendeeinrichtung 110-1 ausgesendeten Sendesignals in dem ersten Empfangssignal findet.

Die Frage beziehungsweise Feststellung, ob es sich den in dem ersten Sendesignal gefundenen Signalanteilen tatsächlich um an dem Fremdkörper 200 reflektierten Signalanteile handelt oder ob diese Signalanteile eventuell von einer in dem Raum befindlichen Störsignalquelle (nicht gezeigt) herrühren, lässt sich anhand der Signalform der in dem ersten Empfangssignal empfangenen Signalanteile in der Regel nicht erkennen. Deshalb ist es hilfreich, wenn zusätzliche Informationen zur Verfügung stehen, welche eine Aussage darüber erlauben, ob das empfangene erste Empfangssignal zumindest teilweise störsignalbehaftet ist oder nicht.

Einen ersten derartigen Hinweis liefert die Zeitdauer, die zwischen dem Aussenden des Sendesignals und dem Zeitpunkt des Empfangs des ersten Empfangssignals vergeht. Ist diese Zeitdauer kürzer als ein durch die Laufzeit des Sendesignals über den Abstand zwischen der ersten Empfangseinrichtung und der Sendeeinrichtung repräsentierter erster Schwellenzeitpunkt, so kann mit Sicherheit ausgeschlossen werden, dass es sich bei dem dann detektierten ersten Empfangssignal um an dem Fremdkörper 200 reflektierte Anteile des Sendesignals handelt. Dies liegt in dem physikalischen Grundprinzip begründet, dass das von der Sendeeinrichtung 110-1 ausgesendete Sendesignal eine Mindestzeit, welche durch den besagten Schwellenwert repräsentiert ist, benötigt, um zu der jeweiligen Empfangseinrichtung 110-2 zu gelangen. Diese Mindestzeit hängt ab von dem direkten Abstand zwischen der Sendeeinrichtung 110 und der Empfangseinrichtung 110-2 sowie von der Ausbreitungsgeschwindigkeit des Sendesignals im Raum, also zum Beispiel der Schallgeschwindigkeit. Aufgrund dieses physikalischen Grundprinzips wird bereits im Stand der Technik der vor dem besagten Schwellenzeitpunkt empfangene Teil des ersten Empfangssignals nicht im Hinblick auf das Vorhandensein des Fremdkörpers 200 ausgewertet.

Jedoch auch nach diesem besagten ersten SchwelLenzeitpunkt ist es möglich, dass das erste Empfangssignal zumindest teilweise Störsignalanteile enthält, die die Zuverlässigkeit eines Rückschlusses über das Vorhandensein des Fremdkörpers in dem Raum deutlich herabsetzen. Es wäre deshalb wünschenswert, wenn insbesondere auch nach dem besagten ersten Schwellenzeitpunkt eine Erkenntnis darüber vorläge, ob das erste Empfangssignal Störsignalanteile enthält oder zumindest enthalten könnte.

Um eine derartige Erkenntnis zu gewinnen, wird in Verfahrensschritt S5 erfindungsgemäß das Empfangssignal der zweiten Empfangseinrichtung 110-4 im Hinblick auf das Vorhandensein von Störsignalanteilen ausgewertet. Um sicher zu sein, dass mit Hilfe der zweiten Empfangseinrichtung 110-4 tatsächlich nur eventuelle Störsignalanteile detektiert werden, wird das zweite Empfangssignal lediglich in einem Zeitintervall zwischen dem Sendezeitpunkt, bei dem das Sendesignal ausgesendet wird, und einem der zweiten Empfangseinrichtung individuell zugeordneten zweiten Schwellenzeitpunkt ausgewertet. Der zweite Schwellenzeitpunkt für die zweite Empfangseinrichtung definiert sich analog wie der der ersten Empfangseinrichtung 110-2 zugeordnete erste Schwellenzeitpunkt; er liegt jedoch zeitlich später in Bezug auf den Sendezeitpunkt als der der ersten Empfangseinrichtung 110-2 zugeordnete Schwellenzeitpunkt, weil der Abstand zwischen der zweiten Empfangseinrichtung 110-4 zu der Sendeeinrichtung 110-1 größer ist als der räumliche Abstand zwischen der ersten Empfangseinrichtung 110-2 und der Sendeeinrichtung 110-1. Die Differenz zwischen den beiden Schwellenzeitpunkten repräsentiert den Zeitraum, in dem auch zeitlich nach dem der ersten Schwellenzeitpunkt noch eine Aussage über das Vorhandensein von eventuellen Störsignalen in dem ersten Empfangssignal möglich ist. Je größer dieses Zeitintervall ist, desto größer ist der mögliche Vorhersagezeitraum; für die Realisierung einer möglichst großen Zeitdifferenz ist es deshalb vorteilhaft, wenn der Abstand zwischen der zweiten Empfangseinrichtung 110-4 und der Sendeeinrichtung 110-1 im Vergleich zu dem Abstand der ersten Empfangseinrichtung 110-2 zu der Sendeeinrichtung 110-1 möglichst groß ist. In der Praxis, insbesondere beim Einbau der Überwachungseinrichtung in einen Stoßfänger 300 ist dieses Verhältnis in der Regel durch die gegebenen Abmessungen des Stoßfängers oder des Kraftfahrzeugs automatisch begrenzt. Wenn auch der besagte Abstand möglichst groß sein sollte, so darf er dennoch nicht so groß sein, dass bei Detektion eines Störsignalanteils in dem zweiten Empfangssignal aufgrund einer zu großen Entfernung zwischen der zweiten und der ersten Empfangseinrichtung die der Erfindung zugrunde liegende Annahme, dass die in dem zweiten Empfangssignal detektierten Störsignalanteile auch in dem ersten Empfangssignal enthalten sind, voraussichtlich nicht mehr zutreffend ist.

Wenn in Verfahrensschritt S6 festgestellt wird, dass bei der in Verfahrensschritt 55 durchgeführten Auswertung Störsignalanteile in dem zweiten Empfangssignal enthalten sind, dann wird gemäß Verfahrensschritt S7 das Ergebnis der in Verfahrensschritt S4 durchgeführten Auswertung des ersten Empfangssignals im Hinblick auf das Vorhandensein des Fremdkörpers 200 verworfen, weil dieses Ergebnis höchstwahrscheinlich durch die in den Verfahrensschritten S5 und S6 festgestellten Störsignalanteile verfälscht ist. Andererseits wird dann, wenn in Verfahrensschritt S6 kein Störsignal in dem zweiten Empfangssignal festgestellt wird, weil es als authentisch beziehungsweise als richtig aufgrund des fehlenden Störsignalanteils eingestuft wird, das erste Empfangssignal zur Auswertung freigeben S10. Die Freigabe gemäß Verfahrensschritt S10 kann, wie durch Verfahrensschritt S9 in Figur 2 angedeutet, an eine zusätzliche Bedingung geknüpft sein. Bei dieser zusätzlichen Bedingung kann es sich zum Beispiel um die Voraussetzung handeln, dass eine vorbestimmte Sperrzeitdauer nach der letzten Detektion eines Störsignalanteils in dem zweiten Empfangssignal verstrichen sein muss, bevor die Freigabe gemäß Verfahrensschritt S10 erfolgt. Die Freigabe des Ergebnisses der Auswertung durch die erste Auswerteeinrichtung 120 in Verfahrensschritt S10 beziehungsweise dessen Sperrung für eine weitere Verwendung ist in Figur 1 durch eine Verbindung von Steuereinrichtung 140 zu der ersten Auswerteeinrichtung 120 angedeutet, über die ein entsprechendes Freigabesignal an die erste Auswerteeinrichtung übertragen wird.

Alternativ dazu kann die Bedingung gemäß Verfahrensschritt S9 darin bestehen, dass nach der letzten Detektion von Störsignalanteilen für eine vorbestimmte Anzahl von wiederholten Auswertungen des zweiten Empfangssignals keine Störsignalanteile mehr in dem zweiten Empfangssignal detektiert worden sein dürfen, bevor die Freigabe gemäß Verfahrensschritt S10 erfolgt. Sollte die jeweilige Bedingung nicht erfüllt sein, wird gemäß Figur 2 Verfahrensschritt S10 übersprungen. Nach Verfahrensschritt S7 oder nach Verfahrensschritt S10 wird in Verfahrensschritt S8 die Variable n, welche die Anzahl der Durchläufe des erfindungsgemäßen Verfahrens repräsentiert, in Verfahrensschritt S8 um eins inkrementiert. Das Verfahren verzweigt dann vorteilhafterweise wieder an den Beginn des Verfahrensschrittes S2, um mit einer erneuten Aussendung des Sendesignals die Überwachung des Raumes im Hinblick auf das Vorhandensein des Fremdkörpers 200 fortzusetzen. Wie bereits oben unter Bezugnahme auf Figur 1 erwähnt, kann es bei dieser Wiederholung vorteilhaft sein, eine Sendeeinrichtung zu aktivieren, welche an einem anderen Ort positioniert ist, wie die bei dem vorherigen Durchlauf aktivierte Sendeeinrichtung 110-1. Bei dem nun folgenden erneuten Durchlauf ist es vorteilhaft, dass eine eventuell als Bedingung in Verfahrensschritt S9 gewählte Sperrzeitdauer erneut in voller Länge zu laufen beginnt, wenn bei der Wiederholung der Verfahrensschritte S5 und S6 erneut festgestellt beziehungsweise bestätigt wurde, dass immer noch Störsignalanteile in dem zweiten Empfangssignal enthalten sind.

Das soeben beschriebene erfindungsgemäße Verfahren wird vorzugsweise in Form eines Computerprogramms für die Überwachungsvorrichtung realisiert. Dieses Computerprogramm kann gegebenenfalls zusammen mit weiteren Computerprogrammen für die Überwachungsvorrichtung auf einem Datenträger abgespeichert sein. Bei dem Datenträger kann es sich um eine Diskette, eine Compact Disc, einen Flash-Memory oder dergleichen handeln. Das auf dem Datenträger abgespeicherte Computerprogramm kann dann als Produkt an einen Kunden verkauft werden.

Alternativ dazu kann das Computerprogramm auch ohne die Zuhilfenahme eines elektronischen Speichermediums über ein elektronisches Kommunikationsnetzwerk, insbesondere das Internet als Produkt an einen Kunden übertragen und verkauft werden.

## Patentansprüche

1. Verfahren zum Überwachen eines Raumes, insbesondere der Umgebung eines Kraftfahrzeuges, im Hinblick auf das Vorhandensein eines Fremdkörpers (200), insbesondere eines Hindernisses, mit Hilfe einer Überwachungsvorrichtung (100), welche mindestens eine Sendeeinrichtung (110-1) und mindestens eine erste (110-2) und eine zweite (110-4) Empfangseinrichtung aufweist, wobei die zweite Empfangseinrichtung (110-4) weiter zu der Sendeeinrichtung (110-1) beabstandet ist als die erste Empfangseinrichtung, umfassend die Schritte:
- Aussenden (S2) eines Sendesignals durch die Sendeeinrichtung (110-1) in den Raum zu einem Sendezeitpunkt,
- Empfangen (S3) eines ersten Empfangssignals durch die erste Empfangseinrichtung (110-2), und
- Auswerten (S4) des ersten Empfangssignals im Hinblick auf das Vorhandensein des Fremdkörpers (200) in dem Raum, wobei der Fremdkörper gegebenenfalls durch an ihm reflektierte Anteile des Sendesignals in dem ersten Empfangssignal repräsentiert wird,
**gekennzeichnet durch**
- das Empfangen mindestens eines zweiten Empfangssignals durch die zweite Empfangseinrichtung (110-4) nach dem Aussenden (52),
- Auswerten (S5), vorzugsweise wiederholt, von wenigstens einem Teil des zweiten Empfangssignals im Hinblick auf Störsignalanteile, welche auf das Vorhandensein einer Störsignalquelle in dem Raum schließen lassen, und
- Durchführen der Überwachung (S6) oder Verwerten (S10) des Ergebnisses der Überwachung nur dann, wenn kein Störsignalanteil in dem zweiten Empfangssignal detektiert wird (Schritt S6, S10), wobei der für die Detektion der Störsignalanteile ausgewertete Teil des zweiten Empfangssignals zeitlich vor einem **durch** den räumlichen Abstand der zweiten Empfangseinrichtung zu der Sendeeinrichtung repräsentierten Schwellenzeitpunkt empfangen wird.

2. Verfahren nach Anspruch 1, **dadurch gekennzeichnet, dass** die Überwachung des Raumes oder die Verwertung des Ergebnisses der Überwachung erst nach Ablauf einer vorbestimmten Sperrzeitdauer nach einer zuletzt erfolgten Detektion von Störsignalanteilen auf Basis des dann aktuellen zweiten Empfangssignals durchgeführt wird (Schritt S9).

3. Verfahren nach Anspruch 2, **dadurch gekennzeichnet, dass** die Sperrzeitdauer bei jeder wiederholten Detektion von Störsignalanteilen erneut in voller Länge zu laufen beginnt.

4. Verfahren nach einem der Ansprüche 1 oder 2, **dadurch gekennzeichnet, dass** die Überwachung des Raumes oder die Verwertung des Ergebnisses der Überwachung erst dann erfolgt, wenn bei einer vorbestimmten Anzahl von Wiederholungen der Auswertung des zweiten Empfangssignals keine Störanteile detektiert wurden (Schritt S9).

5. Verfahren nach einem der vorangegangenen Ansprüche, **dadurch gekennzeichnet, dass** wenn die Überwachungsvorrichtung (110) mehrere Sendeeinrichtungen (110-1) mit jeweils mindestens einer ersten (110-2) und zweiten (110-4) zugeordneten Empfangseinrichtung aufweist, die einzelnen Sendeeinrichtungen mit ihren zugeordneten Empfangseinrichtungen - vorzugsweise zyklisch - abwechselnd bei den einzelnen Wiederholungen der Detektion des Fremdkörpers (200) oder der Auswertung des zweiten Empfangssignals aktiviert werden.

6. Verfahren nach einem der vorstehenden Ansprüche, **dadurch gekennzeichnet, dass** Ultraschallwandler als Wandlereinrichtungen verwendet werden.

7. Computerprogramm mit Programmcode für eine Überwachungsvorrichtung (100), um die Schritte des Verfahrens nach einem der Ansprüche 1 bis 6 durchzuführen, wenn das Programm auf einem Computer ausgeführt wird.

8. Computerprogrammprodukt mit Programmcode, der auf einem computerlesbaren Datenträger gespeichert ist, um das Verfahren nach einem der Ansprüche 1 bis 6 durchzuführen, wenn das Programmprodukt auf einem Computer ausgeführt wird.

9. Überwachungsvorrichtung (100) zum Überwachen eines Raumes, insbesondere der Umgebung eines Kraftfahrzeuges, im Hinblick auf das Vorhandensein eines Fremdkörpers (200), insbesondere eines Hindernisses, umfassend:
- mindestens eine Sendeeinrichtung (110-1) zum Aussenden eines Sendesignals zu mindestens einem Sendezeitpunkt in den Raum;
- mindestens eine erste Empfangseinrichtung (110-2) zum Empfangen eines ersten Empfangssignals und eine zweite Empfangseinrichtung (110-4), wobei die zweite Empfangseinrichtung (110-4) weiter entfernt von der Sendeeinrichtung (110-1) angeordnet ist als die erste Empfangseinrichtung (110-2), und
- eine erste Auswerteeinrichtung (120) zum Auswerten des ersten Empfangssignals im Hinblick auf das Vorhandensein des Fremdkörpers (200) in dem Raum,
**dadurch gekennzeichnet, dass** die zweite Empfangseinrichtung (110-4) zum Empfangen eines zweiten Empfangssignals nach dem Sendezeitpunkt ausgebildet ist, und g**ekennzeichnet durch** eine zweite Auswerteeinrichtung (130) zum Auswerten, vorzugsweise wiederholt, von wenigstens einem Teil des zweiten Empfangssignals im Hinblick auf Störsignalanteile, welche auf das Vorhandensein einer Störsignalquelle in dem Raum schließen lassen, wobei der für die Detektion der Störsignalanteile ausgewertete Teil des zweiten Empfangssignals zeitlich vor einem **durch** den räumlichen Abstand der zweiten Empfangseinrichtung zu der Sendeeinrichtung repräsentierten Schwellenzeitpunkt empfangen wird, und **gekennzeichnet durch** eine Steuereinrichtung (140) zum Aktivieren von zumindest der ersten Auswerteeinrichtung (120) oder zum Freigeben des Ergebnisses der Überwachung über das Vorhandensein des Fremdkörpers nur dann, wenn von der zweiten Auswerteeinrichtung (130) kein Störsignal in dem zweiten Empfangssignal detektiert wurde.

10. Überwachungsvorrichtung nach Anspruch 9, **dadurch gekennzeichnet, dass** die zweite Empfangseinrichtung (110-4) ausgebildet ist, physikalisch gleichartige oder physikalisch andersartige Signale zu empfangen, wie die erste Empfangseinrichtung (110-2).

11. Überwachungsvorrichtung nach einem der Ansprüche 9 oder 10, **dadurch gekennzeichnet, dass** die Wandlereinrichtungen als Ultraschallwandler ausgebildet sind.

## Claims

1. Method for monitoring a space, in particular the environment of a motor vehicle, with regard to the presence of a foreign body (200), in particular of an obstacle, with the aid of a monitoring device (100) which has at least one transmitting device (110-1) and at least one first (110-2) and one second (110-4) receiving device, the second receiving device (110-4) being further away from the transmitting device (110-1) than the first receiving device, comprising the steps:
- emission (S2) of a transmitted signal by the transmitting device (110-1) into the space at a transmission time,
- reception (S3) of a first received signal by the first receiving device (110-2), and
- evaluation (S4) of the first received signal with regard to the presence of the foreign body (200) in the space, the foreign body optionally being represented by components of the transmitted signal in the first received signal, which components have been reflected by said foreign body,
**characterized by**
- the reception of at least one second received signal by the second receiving device (110-4) after emission (S2),
- evaluation (S5), preferably repeatedly, of at least a part of the second received signal with regard to interfering signal components which indicate the presence of an interfering signal source in the space, and
- carrying out of the monitoring (S6) or utilization (S10) of the result of the monitoring only when no interfering signal component is detected in the second received signal (step S6, S10), that part of the second received signal which is evaluated for the detection of the interfering signal components being received at a time before a threshold time represented by the spatial distance of the second receiving device from the transmitting device.

2. Method according to Claim 1, **characterized in that** the monitoring of the space or the utilization of the result of the monitoring is carried out only after the elapse of a predetermined blocking period after a preceding detection of interfering signal components on the basis of the then current second received signal (step S9) .

3. Method according to Claim 2, **characterized in that** the blocking period starts to run its full length again in the case of each repeated detection of interfering signal components.

4. Method according to either of Claims 1 or 2, **characterized in that** the monitoring of the space or the utilization of the result of the monitoring is effected only when no interfering components were detected in the case of a predetermined number of repetitions of the evaluation of the second received signal (step S9) .

5. Method according to any of the preceding Claims, **characterized in that**, if the monitoring device (110) has a plurality of transmitting devices (110-1) having in each case at least one first (110-2) and second (110-4) coordinated receiving device, the individual transmitting devices with their coordinated receiving devices are activated - preferably cyclically - alternately in the case of the individual repetitions of the detection of the foreign body (200) or of the evaluation of the second received signal.

6. Method according to any of the preceding claims, **characterized in that** ultrasonic transducers are used as transducer devices.

7. Computer program with program code for a monitoring device (100), for carrying out the steps of the method according to any of Claims 1 to 6, if the program is executed on a computer.

8. Computer program product with program code which is stored on a computer-readable data medium, for carrying out the method according to any of Claims 1 to 6, if the program product is executed on a computer.

9. Monitoring device (100) for monitoring a space, in particular the environment of a motor vehicle, with regard to the presence of a foreign body (200), in particular of an obstacle, comprising:
- at least one transmitting device (110-1) for emitting a transmitted signal at at least one transmitting time into the space;
- at least one first receiving device (110-2) for receiving a first received signal and a second receiving device (110-4), the second receiving device (110-4) being arranged further away from the transmitting device (110-1) than the first receiving device (110-2), and
- a first evaluation device (120) for evaluating the first received signal with regard to the presence of the foreign body (200) in the space,
**characterized in that** the second receiving device (110-4) is formed for receiving a second received signal after the transmission time, and **characterized by** a second evaluation device (130) for evaluating, preferably repeatedly, at least a part of the second received signal with regard to interfering signal components which indicate the presence of an interfering signal source in the space, that part of the second received signal which is evaluated for the detection of the interfering signal components being received at a time before a threshold time represented by the spatial distance of the second receiving device from the transmitting device, and **characterized by** a control device (140) for activating at least the first evaluation device (120) or for releasing the result of the monitoring for the presence of the foreign body only when no interfering signal was detected in the second received signal by the second evaluation device (130) .

10. Monitoring device according to Claim 9, **characterized in that** the second receiving device (110-4) is formed to receive physically identical or physically different signals, like the first receiving device (110-2).

11. Monitoring device according to either of Claims 9 or 10, **characterized in that** the transducer devices are in the form of ultrasonic transducers.

## Revendications

1. Procédé de surveillance d'un espace, en particulier de l'environnement d'un véhicule automobile, quant à la présence d'un corps étranger (200), en particulier d'un obstacle, à l'aide d'un dispositif de surveillance (100), qui présente au moins un dispositif d'émission (110-1) et au moins un premier (110-2) et un deuxième (110-4) dispositif de réception, le deuxième dispositif de réception (110-4) étant plus éloigné du dispositif d'émission (110-1) que le premier dispositif de réception, le procédé comprenant les étapes consistant à :
- émettre (S2) un signal d'émission par le dispositif d'émission (110-1) dans ledit espace à un instant d'émission,
- recevoir (S3) un premier signal de réception par le premier dispositif de réception (110-2), et
- évaluer (S4) le premier signal de réception quant à la présence du corps étranger (200) dans ledit espace, le corps étranger étant le cas échéant représenté par des composantes du signal d'émission, réfléchies sur celui-ci, dans le premier signal de réception,
**caractérisé par**
- la réception d'au moins un deuxième signal de réception par le deuxième dispositif de réception (110-4) après l'émission (S2),
- l'évaluation (S5), de préférence répétée, d'au moins une partie du deuxième signal de réception quant à des composantes de signal parasite qui permettent de conclure à la présence d'une source de signaux parasites dans ledit espace, et
- l'exécution de la surveillance (S6) ou de l'évaluation (S10) du résultat de la surveillance uniquement quand aucune composante de signal parasite n'est détectée dans le deuxième signal de réception (étape S6, S10), la partie évaluée pour la détection des composantes de signal parasite du deuxième signal de réception étant reçue dans le temps avant un instant de seuil représenté par la distance physique entre le deuxième dispositif de réception et le dispositif d'émission.

2. Procédé selon la revendication 1, **caractérisé en ce que** la surveillance dudit espace ou l'utilisation du résultat de la surveillance est exécutée seulement à l'issue d'une période de blocage prédéterminée après une détection ayant eu lieu en dernier de composantes de signal parasite sur la base du deuxième signal de réception alors actuel (étape S9).

3. Procédé selon la revendication 2, **caractérisé en ce que** la période de blocage, à chaque détection répétée de composantes de signal parasite, recommence à courir sur toute sa durée.

4. Procédé selon l'une quelconque des revendications 1 ou 2, **caractérisé en ce que** la surveillance dudit espace ou l'utilisation du résultat de la surveillance a lieu seulement si lors d'un nombre prédéterminé de répétitions de l'évaluation du deuxième signal de réception aucune composante parasite n'a été détectée (étape S9).

5. Procédé selon l'une quelconque des revendications précédentes, **caractérisé en ce que** si le dispositif de surveillance (110) présente plusieurs dispositifs d'émission (110-1) avec respectivement au moins un premier (110-2) et un deuxième (110-4) dispositif de réception associés, les dispositifs d'émission individuels avec leurs dispositifs de réception associés sont activés - de préférence de façon cyclique - en alternance lors des répétitions individuelles de la détection du corps étranger (200) ou de l'évaluation du deuxième signal de réception.

6. Procédé selon l'une quelconque des revendications précédentes, **caractérisé en ce que** des transducteurs d'ultrasons sont utilisés comme dispositifs de transduction.

7. Programme informatique avec code de programme pour un dispositif de surveillance (100) pour exécuter les étapes du procédé selon l'une quelconque des revendications 1 à 6, lorsque le programme est exécuté sur un ordinateur.

8. Produit de programme informatique avec un code de programme qui est stocké sur un support de données lisible par ordinateur pour exécuter le procédé selon l'une quelconque des revendications 1 à 6 lorsque le produit de programme est exécuté sur un ordinateur.

9. Dispositif de surveillance (100) pour surveiller un espace, en particulier l'environnement d'un véhicule automobile, quant à la présence d'un corps étranger (200), en particulier d'un obstacle, comprenant :
- au moins un dispositif d'émission (110-1) pour émettre un signal d'émission à au moins un instant d'émission dans ledit espace,
- au moins un premier dispositif de réception (110-2) pour recevoir un premier signal de réception et un deuxième dispositif de réception (110-4), le deuxième dispositif de réception (110-4) étant plus éloigné du dispositif d'émission (110-1) que le premier dispositif de réception (110-2), et
- un premier dispositif d'évaluation (120) pour évaluer le premier signal de réception quant à la présence du corps étranger (200) dans ledit espace,
**caractérisé en ce que** le deuxième dispositif de réception (110-4) pour la réception d'un deuxième signal de réception est réalisé après l'instant d'émission, et **caractérisé par** un deuxième dispositif d'évaluation (130) pour l'évaluation, de préférence répétée, d'au moins une partie du deuxième signal de réception quant à des composantes de signal parasite qui permettent de conclure à la présence d'une source de signaux parasites dans ledit espace, la partie évaluée pour la détection des composantes de signal parasite du deuxième signal de réception étant reçue dans le temps avant un instant de seuil représenté par la distance physique entre le deuxième dispositif de réception et le dispositif d'émission, et **caractérisé par** un dispositif de commande (140) pour activer au moins le premier dispositif d'évaluation (120) ou pour débloquer le résultat de la surveillance concernant la présence du corps étranger uniquement lorsque le deuxième dispositif d'évaluation (130) n'a détecté aucun signal parasite dans le deuxième signal de réception.

10. Dispositif de surveillance selon la revendication 9, **caractérisé en ce que** le deuxième dispositif de réception (110-4) est réalisé pour recevoir des signaux physiquement identiques ou physiquement différents, par rapport au premier dispositif de réception (110-2).

11. Dispositif de surveillance selon l'une quelconque des revendications 9 ou 10, **caractérisé en ce que** les dispositifs de transduction sont réalisés comme des transducteurs d'ultrasons.
